(19) Europäisches Patentamt
European Patent Office
Office européen des brevets

(11) **EP 0 719 498 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(51) Int. Cl.$^6$: **A01N 25/16**

(21) Anmeldenummer: **95118834.1**

(22) Anmeldetag: **30.11.1995**

(54) **Rodentizide Schäume**

Rodenticidal foams

Mousses rodenticides

(84) Benannte Vertragsstaaten:
**AT BE CH DE DK ES FR GB GR IE IT LI NL PT SE**

(30) Priorität: **13.12.1994 DE 4444261**

(43) Veröffentlichungstag der Anmeldung:
**03.07.1996 Patentblatt 1996/27**

(73) Patentinhaber: **BAYER AG**
**51368 Leverkusen (DE)**

(72) Erfinder:
• **Sirinyan, Kirkor, Dr.**
**D-51467 Bergisch Gladbach (DE)**

• **Schütte, Manfred-Heinrich, Dr.**
**D-50259 Pulheim (DE)**
• **Hesse, Gerhard, Dr.**
**D-51519 Odenthal-Blecher (DE)**
• **Pospischil, Reiner, Dr.**
**D-50129 Bergheim (DE)**
• **Sonneck, Rainer, Dr.**
**D-53175 Leverkusen (DE)**
• **Schnorbach, Hans-Jürgen, Dr.**
**D-40789 Monheim (DE)**

(56) Entgegenhaltungen:
GB-A- 1 053 088     US-A- 3 816 610
US-A- 4 836 939

**Beschreibung**

Die vorliegende Erfindung betrifft rodentizide Schäume auf Basis hydrophiler Polymere.

Es ist bekannt, daß Indandionderivate und 4-Hydroxycumarine den Prothrombinspiegel des Blutes senken. Sie führen bei Nagetieren zu einer hohen Sterblichkeit durch innere Blutungen. Aus diesem Grunde werden sie als rodentizide Mittel eingesetzt (vgl. beispielsweise hierzu DE-OS 2 506 769, JP-PS 480 23 942; CH-PS 481 580).

In vielen Fällen wird der rodentizide Wirkstoff mit verschiedenen von den Nagetieren verzehrbaren Mitteln wie z.B. Getreide, Mehl, Zucker und Öl bzw. mit anorganischen Hilfsmitteln wie z.B. Talkum-, Kreide- und $TiO_2$-Pulver vermischt.

Die nach dieser Methode hergestellten Köder besitzen jedoch den Nachteil, daß ihre Anziehungskraft gegenüber den Nagetieren mit der Zeit stark abnimmt. Die Abnahme der Attraktivität ist auf chemischen Abbau des Wirkstoffes bzw. der verzehrbaren Mittel zurückzuführen.

Es ist bekannt, daß die Anziehungskraft der Köder dadurch erhalten wird, indem man den Wirkstoff mit Polymeren wie z.B. Ethylcellulose, ethoxylierte Polyarylphenole, Polyoxyethylenglykole, Hydroxypropylmethylcellulose usw. beschichtet (vgl. EP 0 317 260, DE 26 47 722 und CA 107 963). Diese Methode hat den Nachteil, daß dadurch nur der Wirkstoff jedoch nicht die von Nagetieren verzehrbaren Mittel vor Alterung geschützt werden. Aus diesem Grund ist diese Methode zur Erhaltung der Anziehungskraft von Ködern ungeeignet.

Es ist ferner bekannt, daß die Anziehungskraft von Ködern gegenüber den Nagetieren dadurch erhalten wird, indem man als Trägermaterial chemisch stabile, hydrierte Öle und Fette einsetzt (vgl. hierzu JP-OS 620 30 161). In der Regel weisen aber völlig hydrierte oder doppelbindungsarme Öle und Fette gegenüber den Nagetieren eine geringere Anziehungskraft auf.

Aus diesem Grund wurde versucht, rodentizide Weichschäume zu entwickeln, die frei von oxidationsempfindlichen Mitteln sind. Derartige Rodentizidschäume enthalten in der Regel aliphatische Säuren wie Stearinsäure; neutrale, anionische oder kationische Emulgatoren; verschiedenartige Wachse, Wasser und Wirkstoffe (vgl. beispielsweise hierzu GB-PS 1 053 088, GB-PS 1 274 442, SU-PS 363 474).

Diese Rodentizidschäume haben aber den Nachteil, daß sie geringe Lagerstabilität und insbesondere geringe Kälte- bzw. Feuchtestabilität aufweisen. Sie kollabieren im Lauf der Zeit zu einer kompakten, hochviskosen Masse und verlieren ihre biologische Wirkung.

Aus diesem Grunde wurde versucht, lagerstabile rodentizide Hartschäume auf Basis von Polystyrolen, Polyacrylaten und Zweikomponenten-Polyisocyanaten zu entwickeln (vgl. beispielsweise hierzu JP-OS 55 085 501, FR-PS 2 676 888 und US-PS 4 190 734). Diese rodentiziden Hartschäume zeichnen sich durch Lager-, Kälte- und Feuchtestabilität aus. Sie haben jedoch den Nachteil, daß ihre Herstellung aufwendig ist. Ferner ist ihre biologische Wirkung in vielen Fällen gering.

Der Erfindung liegt deshalb die Aufgabe zugrunde, ein neues rodentizides Schaumsystem zu entwickeln, welches sich durch Lagerstabilität, Feuchte-und Kältebeständigkeit, einfacher Herstellbarkeit und Applikation sowie durch gute biologische Wirkung auszeichnet.

Die vorliegende Erfindung betrifft rodentizide Weichschäume die aus folgenden Komponenten bestehen:

a) rodentizider Wirkstoff,
b) hydrophile Polymere mit einer mittleren Molmasse von 2000 bis 60 000 (bestimmt mittels Gelpermeationschromatographie (GPC)) aus der Reihe der langkettigen Polyurethane, Polyester, Polyesterpolyole, Polystyrole, Polybutadiene, Maleinsäurepolymere die jeweils in der Polymerkette durch Carbonsäure- oder Aminogruppen modifiziert sind,
c) langkettige aliphatische $C_6$-$C_{22}$-Fettsäuren wie Palmitinsäure, Dodecansäure und Stearinsäure bzw. deren Alkali-, Erdalkali- und Ammoniumsalze
d) sowie gegebenenfalls weitere Hilfsmitel aus der Reihe Farbstoffe, Emulgatoren, Lösungsmittel, Konservierungsmittel, Lock- und Köderstoffe.

Die erfindungsgemäß verwendeten Polymere sind beispielsweise in H. Kittel, Lehrbuch der Lacke und Beschichtungen, Band IV, Seiten 76 bis 306, Verlag W.A. Colomb (1986) oder in dem gleichen Lehrbuch, Ausgabe (1976), Band IV, Seiten 328 bis 358 als Lackbindemittel beschrieben.

Erfindungsgemäß verwendbare Polymere sind physikalisch trocknende Bindemittel, z.B. solche, deren Binder auf einem ausreagierten, linearen Polyurethan aus (i) einem Polyesterpolyol, (ii) einem Kettenverlängerungsmittel und (iii) einem Diisocyanat und (iv) einer Hydroxycarbonsäure basieren.

Geeignete Polyesterpolyole (i) zur Herstellung solcher Polyurethane sind beispielsweise Adipinsäure, Alkandiol, Polyesterdiole des Molekulargewichtsbereichs 600 bis 3000. Bei den Alkandiolen handelt es sich beispielsweise um Butandiol-1,4, Hexandiol-1,6, Neopentylglykol oder Mischungen derartiger Glykole. Geeignete Kettenverlängerungsmittel (ii) sind beispielsweise Diole der zur Herstellung der Polyesterdiole eingesetzten Art und auch Diamine wie

EP 0 719 498 B1

Hexamethylendiamin oder Isophorondiamin. Geeignete Diisocyanate (iii) sind beispielsweise 4,4-Diisocyanatodiphenylmethan, Isophorondiisocyanat oder Hexamethylendiisocyanat. Die Polyurethane werden in an sich bekannter Weise durch Umsetzung der Ausgangsmaterialien hergestellt, wobei ein Äquivalentverhältnis von Isocyanatgruppen gegenüber Isocyanatgruppen reaktionsfähiger Gruppen von ca. 0,9:1 bis 1,1:1 eingehalten wird.

Erfindungsgemäß verwendbar sind auch oxidativ trocknende Bindemittel. Als solche seien genannt Bindemittel auf Polybutadien-, Styrol- und Maleinsäureanhydridbasis mit ionischen Gruppen, wie sie in den Anmeldungen EP-OS 0 170 184 und EP-OS 0 270 795 beschrieben sind.

Die erfindungsgemäß verwendbaren hydrophilen Polymere haben eine mittlere Molmasse von 2000 bis 60 000 g/Mol, bevorzugt von 2500 bis 25 000 g/Mol. Sie liegen in der fertigen Formulierung in einer Konzentration von 2,5 bis 40, bevorzugt 2,5 bis 10 Gew.-% bezogen auf das Gewicht der Gesamtformulierung vor.

Zur Herstellung des erfindungsgemäßen Rodentizidweichschaums sind grundsätzlich alle rodentiziden Wirkstoffe geeignet. In diesem Zusammenhang sei insbesondere auf die antikoagulierenden Substanzen, wie die 4-Hydroxycumarinderivate (1-Phenyl-2-acetyl)-3-ethyl-4-hydroxycumarin ("Warfarin "), 3-($\alpha$-Acetonyl-4-chlorbenzyl)-4-hydroxycumarin ("Coumachlore"), [3-(4'-Hydroxy-3'-cumarinyl)-3-phenyl-1-(4'-brom-4'-biphenyl)-propan-1-ol ("Bromadiolone"), 3-(3'-Paradiphenylyl-1',2',3',4'-tetrahydro-1'-naphthyl)-4-hydroxycumarin ("Difenacoum") Brodifacoum, Flocoumafen und 3-(1',2',3',4'-Tetrahydro-1'-naphthyl)-4-hydroxycumarin ("Coumatetralyl"), die Indandionderivate, wie 1,1-Diphenyl-2-acetyl-indan-1,3-dion ("Diphacinone") und (1'-p-Chlorphenyl-1'-phenyl)-2-acetyl-indan-1,3-dion ("Chlorodiphacinone") und die Hydroxy-4-benzothiopyranone z.B. Difethialone hingewiesen.

Als weitere Antikoagulantien, die zur Herstellung der erfindungsgemäßen Köder geeignet sind, seien die folgenden 2-Azacycloalkylmethyl substituierten Benzhydrylketone und -carbinole genannt:
1-Phenyl-3-(2-piperidyl)-1-(p-tolyl)-2-propanon, 3,3-Diphenyl-1-(2-pyrrolidinyl)-2-pentanon, 1,1-Diphenyl-3-[2-(hexahydro-1H-azepinyl)]-2-propanon, 1-(4-Fluorphenyl)-1-phenyl-3-(2-piperidyl)-2-propanon, 1-(4-Methylthiophenyl)-1-phenyl-3-(5,5-dimethyl-2-pyrrolidinyl)-2-propanon, 1-(p-Cumenyl)-1-phenyl-3-(4-tert.-butyl-2-piperidinyl)-2-propanon, 3,3-Diphenyl-1-[2-(hexahydro-1H-azepinyl]-2-butanon, 3-(2,4-Dichlorphenyl)-3-phenyl-1-(2-piperidyl)-2-heptanon, 1,1-Diphenyl-3-(5-methyl-2-pyrrolidinyl)-2-propanone, 3,3-Diphenyl-1-(2-piperidyl)-2-butanon, $\alpha$-($\alpha$-Methyl-$\alpha$-phenylbenzyl)-2-piperidinethanol, $\alpha$-($\alpha$-Ethyl-$\alpha$-phenylbenzyl)-2-pyrrolidinethanol, (2,5-Dimethyl-$\alpha$-phenylbenzyl)-2-piperidinethanol und $\alpha$-(Diphenylmethyl)-2-(hexahydro-1H-azepin)ethanol und ihre Salze, die in der DT-OS 2 417 783 beschrieben sind, sowie 4'-(Fluorphenyl)-2-(2-pyrrolidinyl)-acetophenon, 4'-Phenyl-2-(5,5-dimethyl-2-pyrrolidinyl)-acetophenon, 4'-[p-(Trifluormethyl)phenyl]-2-(2-piperidyl)-acetophenon, 4'-(p-Butoxyphenyl)-2-(4-tert.-butyl-2-piperidyl)-acetophenon, 2'-Phenoxy-2-(2-piperidyl)-acetophenon, 4'-(p-Fluorphenoxy)-2-(5,5-dimethyl-2-pyrrolidinyl)-acetophenon, 4'-(p-Chlorphenoxy)-2-(2-piperidyl)-acetophenon, 4'-[m-(Trifluormethyl)-phenoxy]-2-(2-piperidyl)-acetophenon, 4'-(p-Butoxyphenoxy)-2-(2-pyrrolidinyl)-acetophenon, 2-(2-Piperidyl)-4'-(trans-p-tolylvinylen)-acetophenon, 2-(2-Hexahydro-1H-azepinyl)-4'-(trans-styryl)-acetophenon, 4'-(m-Methoxyphenylvinylen)-2-(2-pyrrolidinyl)-acetophenon, 2-(2-Piperidyl)-4'-[(p methylthio)-phenylvinylen]-acetophenon, 4'-(3-Phenoxypropoxy)-2-(2-piperidyl)acetophenon, 4'-(4-Phenylbutyl)-2-(2-piperidyl)-acetophenon, 4'-($\alpha,\alpha$-Dimethylbenzyl)-2-(piperidyl)-acetophenon, 4'-Phenethyl-2-(3,5-diethyl-2-piperidyl)acetophenon, 4'-Phenyl-2-(2-pyrrolidinyl)-acetophenon, $\alpha$-[2-(2-Phenyl-ethoxy)phenyl]-2-piperidinethanol, $\alpha$-(p-Phenoxyphenyl)-2-pyrrolidinethanol, $\alpha$-[4-(4-Bromphenoxy)-phenyl]-6-methyl-2-piperidinethanol, $\alpha$-(p-Phenethyl)-phenyl-2-pyrrolidinethanol, $\alpha$-p-Bisphenyl-2-hexanhydro-1H-azepinethanol, $\alpha$-[3-(4-Phenoxybutoxy)-phenyl]-2-piperidinethanol und $\alpha$-(4-Benzyl)-phenyl-2-piperidinethanol und ihre Salze, die in der DT-OS 2 418 480 beschrieben sind.

Selbstverständlich können zur Herstellung des neuen rodentiziden Weichschaums auch Akutgifte eingesetzt werden.

Die folgenden Seltenerdmetallsalze können ebenfalls als Antikoagulans verwendet werden: Dineodymdihydroxybenzoldisulfonat (Acta physiol. Acad. Sci. Hungar. 24, 373), Dineaodym-3-sulfonato-pyridin-carboxylat-(4) und Cer-(III)-tris-(4-aminobenzolsulfonat).

Die Menge der Antikoagulantien kann im Bereich zwischen 0,001 bis 5 % (Gewichtsprozent bezogen auf die gesamte Ködermasse) breit variiert werden, wobei Mengen zwischen 0,01 bis 1,0 % zu bevorzugen sind.

Die erfindungsgemäßen Köder können selbstverständlich mit anderen Wirkstoffen wie Cholecalciferol und Calciferol in Mengen von 0,001 bis 1,0 % versetzt werden.

Selbstverständlich können die erfindungsgemäßen Weichschäume mit Hilfsstoffen aus der Gruppe Lockstoffe, Duftstoffe, Aromastoffe, Paraffinderivate, hydrierten Fetten und Ölen versehen werden.

Als Lockstoffe seien u.a. genannt natürliche Öle wie Sojaöl, Rapsöl, Maisöl oder Olivenöl, Ölsäureester wie z.B. Glyceride und Sorbitansäureester sowie deren Mischungen. Ferner seien genannt Süßstoffe wie Zucker, Maltose, Saccharose oder Melasse.

Die so hergestellten rodentiziden Systeme sind Vormischungen. In der Regel müssen sie vor der Applikation mit Wasser in Mengen 0-80 % verdünnt werden.

Die Herstellung der erfindungsgemäßen Weichschäume kann in an sich bekannter Weise durch Rühren oder Schütteln erfolgen. Eine andere Möglichkeit ist die in situ Herstellung mittels Treibmitteln während der Applikation.

Als Treibmittel für die Herstellung der erfindungsgemäßen Formulierungen seien genannt $CO_2$, $N_2O$, niedere

Alkane wie Propan oder n-Butan, iso-Butan, halogenhaltige niedere Alkane sowie tiefsiedende Ether wie Dimethylether und Mischungen der besagten Treibmittel.

Der erfindungsgemäße Schaum weist eine hervorragende Haftung am Nagetierfell auf. Er ist über mehrere Wochen dimensionsstabil und hat gute Nagetier-Aktivität. Er eignet sich zur Bekämpfung von Nagetieren wie Ratten, Mäusen usw., auch an feuchten Standorten (z.B. Kanäle, Flußufer).

Ohne den Umfang der Erfindung einzuschränken, soll sie anhand der nachfolgenden Ausführungsbeispiele näher erläutert werden.

**Beispiel 1**

| 1. | Coumatetralyl | 0,07 % |
|---|---|---|
| 2. | Stearinsäure | 7,50 % |
| 3. | Triethanolamin | 4,16 % |
| 4. | Polywachs 1550 | 2,50 % |
| 5. | NP 10, ein nicht ionischer Emulgator | 1,00 % |
| 6. | Glycerin | 8,00 % |
| 7. | Kristallzucker | 5,00 % |
| 8. | Bayhydrol VP-LS 2069 | 10,00 % |
| 9. | Leitungswasser ca. | 54,27 % |
| 10. | Isobutan | 7,50% |
| | | 100,00 % = 250 g |

Diese Formulierung wurde in Al-Dosen (1 000 ml) abgefüllt. Bayhydrol VP-LS 2069 ist ein wäßriges Polyesterpolyurethan der Fa. Bayer AG, D-51368 Leverkusen. Es besteht aus Sojaölfettsäure, Trimethylolpropan, Hexandiol, Adipinsäure, Isophtalsäure, Dimethylolpropionsaure, Hexamethyldiisocyanat, Isophorondiisocyanat, Neopenthylglycol und Dimethylethanolamin.

Diese Formulierung führt zu Weichschäumen, die sich durch ihre Langzeit-und Kältestabilität auszeichnen. Die so hergestellten Weichschäume sind mehrere Wochen bei -4°C Kältestabil und weisen hervorragende biologische Wirkung gegenüber den Nagetieren auf. Sie eignen sich zur Bekämpfung von Mäusen, Ratten usw. sehr gut.

Ermittlung der biologischen Wirkung

Rattus norvegicus Wildstamm

Die Tiere stammen aus Freilandfängen und werden im Labor gezüchtet. Gewicht der eingesetzten Versuchstiere in g: 230 / 285 / 234 / 342 / 325

Versuchsmethode:

Der Versuch wurde mit Wanderratten (Rattus norvegicus) Wildform (Anzahl: 5) in einem Kleingehege in Anlehnung an die Richtlinie 9 - 3.2 der BBA durchgeführt. Das Gehege bestand aus drei hintereinander liegenden Kammern. Jede Kammer hatte eine Grundfläche von 1 m². Die einzelnen Kammern waren durch Schlupflöcher miteinander verbunden (Batterie). Eine Kammer, die den Ratten als "Wohnraum" diente, enthielt einen Nestkasten mit Heu und Zellstoff zum Nestbau. Die mittlere Kammer blieb leer. In der dritten Kammer wurden das Futter und das Prüfmittel ausgebracht. Trinkwasser stand während der gesamten Versuchszeit ad libitum zum Verfügung. Nach der Entnahme der Ratten aus den Zuchtgehegen konnten sie sich 3 Tage an die neue Umgebung gewöhnen. Nach dieser Eingewöhnung wurden die Ratten einen Tag mit Altromin O (Standarddiät) vorgefüttert.

Anschließend wurde in der 3. Kammer am Eingang ein Schaumteppich ausgebracht (Durchmesser: 40 x 60 cm / Höhe: 1 cm). Die Fütterung erfolgte weiterhin mit Altromin O, und die Fraßmengen wurden täglich durch Rückwiegen bestimmt.

Ergebnisse:

Die Ergebnisse sind in den Tabellen 1 und 2 dargestellt.

Tabelle 1

| Reaktionen von Wanderratten auf einem Rodentizid-Schaum-Teppich zwischen Wohn- und Futterbereich | |
| --- | --- |
| Versuchsbeginn | Im Futterbecken wird vor dem Eingang ein halbkreisförmiger Schaum-Teppich (Durchmesser: 60 x 40 cm / Höhe: 1 cm) ausgebracht. |
| 1. Tag | Die Ratten haben 2 kreisförmige Löcher in dem Schaum gebildet, mit deren Hilfe sie den Schaum durch Springen überqueren können, um das Futter zu erreichen. Einige Schaumflokken liegen im Laufbecken. Die Ratten haben ein sauberes Fell. |
| 2. Tag | Der Schaumteppich wird erneuert. |
| 2. Tag | Die Ratten haben einen Durchgang durch den Schaum gebildet, durch den sie das Futter erreichen können, ohne den Schaum zu berühren. Einige Schaumflocken liegen im Laufbecken. Die Versuchstiere haben ein sauberes Fell. |
| 3. Tag | Gleiches Ergebnis wie am 2. Tag. |
| 4. Tag | Die 1. Ratte ist tot; ansonsten ergibt sich das gleiche Ergebnis wie am vorhergehenden Tag. |
| 5. Tag | Die 2. Ratte ist tot. Ein Tier hat Koordinationsprobleme. Der Schaumteppich wird von den verbliebenen Ratten weiterhin durchquert. |
| 6. Tag | Die 3. Ratte ist gestorben und 1 Tier hat Vergiftungssymptome. |
| 7. Tag | Die 4. Ratte ist tot. Das letzte lebende Tier zeigt keine Vergiftungssymptome. |
| 8.-11. Tag | Am 10. Tag zeigt auch die 5. Ratte Vergiftungssymptome. Am 11. Tag ist das Tier tot. |

Tabelle 2

| Futteraufnahme während der 11 Versuchstage (n = 5 Wanderratten) | | | |
| --- | --- | --- | --- |
| Versuchstag | 1. Futterstelle g | 2. Futterstelle g | Gestorbene Individuen (Summe) |
| 1 | 31,6 | 22,4 | 0 |
| 2 | 71,1 | 44,0 | 0 |
| 3 | 71,7 | 32,7 | 0 |
| 4 | 30,9 | 21,4 | 1 |
| 5 | 0,0 | 2,9 | 2 |
| 6 | 2,8 | 0,0 | 3 |
| 7 | 2,3 | 2,9 | 4 |
| 8 | 4,0 | 0,0 | 4 |
| 9 | 3,0 | 0,0 | 4 |
| 10 | 0,0 | 3,1 | 4 |
| 11 | 0,0 | 0,0 | 5 |

Der Schaumteppich zwischen Wohn- und Futterbereich mußte von den Tieren zwangsweise durchlaufen werden, um an das Futter zu gelangen. Die Tiere bildeten einen schmalen Pfad durch den Schaum. Schaumflocken, die am Fell hängen blieben, wurden entweder im mittleren Becken abgestreift oder durch Putzen vom Fell entfernt.

Die Dauer bis zur Abtötung der Tiere (4-7 Tage) entspricht unseren Erfahrungen mit dem "multiple dose Antikoagulanz Coumatetralyl".

Ein Tier zeigte bis zum 9. Tag keine Vergiftungssymptome und starb erst am 11. Tag. Es ist anzunehmen, daß dieses Tier in den ersten Nächten erst den Schaumteppich durchquert hatte, nachdem die anderen Tiere des Rudels bereits eine Gasse gebildet hatten, durch die eine Durchquerung des Schaumteppichs ohne Kontamination möglich war.

**Beispiel 2**

| 1. | Coumatetrolyl | 0,07 % |
|----|----|----|
| 2. | Stearinsäure | 7,50 % |
| 3. | Triethanolamin | 4,16 % |
| 4. | Polywachs 1550 | 2,50 % |
| 5. | NP 10 | 1,00 % |
| 6. | Glycerin | 8,00 % |
| 7. | Kristallzucker | 5,00 % |
| 8. | Bayhydrol VP-LS 2845 | 10,00 % |
| 9. | Leitungswasser | 54,27 % |
| 10. | Isobutan/Propan (1:1) | 7,50 % |
| | | 100,0 % = 250 g |

Diese Formulierung wurde in 1000 ml Dosen abgefüllt. Bayhydrol VP-LS 2845 ist eine wäßrige Polyesterpolyurethan-Lösung der Fa. Bayer AG D-51368 Leverkusen. Die Polyurethankomponente besteht aus Sojaoelfettsäure, Trimethylolpropan, Hexandiol, Adipinsäure, Isophtalsäure, Dimethylolpropionsäure, Isophorondiisocyanat und Dimethylethanolamin. Diese Formulierung führt zu Weichschäumen, die sich durch ihre Langzeit- und Kältestabilität auszeichnen. Die so hergestellten Weichschäume sind mehrere Wochen bei 14 °C kältestabil und weisen hervorragende biologische Wirksamkeit auf.

**Beispiel 3**

| 1. | Coumatetrolyl | 0,07 % |
|----|----|----|
| 2. | Stearinsäure | 7,50 % |
| 3. | Triethanolamin | 4,16 % |
| 4. | Polywachs 1550 | 2,50 % |
| 5. | NP 10 | 1,00 % |
| 6. | Glycerin | 8,00 % |
| 7. | Kristallzucker | 5,00 % |
| 8. | Bayhydrol B 130 | 10,00 % |
| 9. | Leitungswasser | 54,27 % |

# EP 0 719 498 B1

(fortgesetzt)

| 10. | Isobutan | 7,50 % |
|-----|----------|--------|

Bayhydrol B 130 ist eine wäßrige Polymerlösung der Fa. Bayer AG. Die Polymerkomponente besteht aus Maleinsäureanhydrid, Styrol, Polybutadien und Ammoniak.

Diese Formulierung führt zu Weichschäumen, die sich durch ihre Langzeit-und Kältestabilität auszeichnen. Die so hergestellten Weichschäume sind mehrere Wochen bei + 4 °C kältestabil und weisen hervorragende biologische Wirkung gegenüber den Nagetieren wie Mäusen und Ratten auf.

## Patentansprüche

1. Rodentizide Weichschäume die aus folgenden Komponenten bestehen:

   a) rodentizider Wirkstoff;
   b) hydrophile Polymere mit einer mittleren Molmasse von 2000 bis 60 000 (bestimmt mittels Gelpermeationschromatographie (GPC)) aus der Reihe der langkettigen Polyurethane, Polyester, Polyesterpolyole, Polystyrole, Polybutadiene, Maleinsäurepolymere die jeweils in der Polymerkette durch Carbonsäure- oder Aminogruppen modifiziert sind,
   c) langkettige aliphatische $C_6$-$C_{22}$-Fettsäuren
   d) sowie gegebenenfalls weitere Hilfsmitel aus der Reihe Farbstoffe, Emulgatoren, Lösungsmittel, Konservierungsmitel, Lock- und Köderstoffe.

2. Vormischungen zur Herstellung rodentizider Weichschäume bestehend aus:

   a) rodentizidem Wirkstoff,
   b) hydrophile Polymere mit einer mittleren Molmasse von 2000 bis 60 000 aus der Reihe der langkettigen Polyurethane, Polyester, Polyesterpolyole, Polystyrole, Polybutadiene, Maleinsäurepolymere die jeweils in der Polymerkette durch Carbonsäure- oder Aminogruppen modifiziert sind,
   c) langkettige aliphatische $C_6$-$C_{22}$-Fettsäuren wie Palmitinsäure, Dodecansäure und Stearinsäure bzw. deren Alkali-, Erdalkali- und Ammoniumsalze
   d) sowie gegebenenfalls weitere Hilfsmitel aus der Reihe Farbstoffe, Emulgatoren, Lösungsmittel, Konservierungsmitel, Lock- und Köderstoffe.

3. Herstellung der Vormischungen nach Anspruch 2, dadurch gekennzeichnet, daß man den rodentiziden Wirkstoff in der Vormischungslösung bestehend aus dem Polymer, Fettsäure sowie gegebenenfalls aus weiteren Hilfsmitteln löst, dispergiert, emulgiert oder suspendiert.

4. Verfahren zur Herstellung rodentizider Weichschäume aus Vormischungen nach Ansprüchen 1 bis 3, dadurch gekennzeichnet, daß man sie mit Wasser in Mengen von 0 bis 80 % versetzt und dann durch Rühren, Schütteln oder in situ mittels Treibmittel während der Applikation herstellt.

## Claims

1. Flexible rodenticidal foams which comprise the following components:

   a) rodenticidal active compound,

   b) hydrophilic polymers having an average molecular weight of 2000 to 60 000 (determined by means of gel permeation chromatography (GPC)) from the series consisting of long-chain polyurethanes, polyesters, polyester-polyols, polystyrenes, polybutadienes and maleic acid polymers, which are in each case modified in the polymer chain by carboxylic acid groups or amino groups,

   c) long-chain aliphatic $C_6$-$C_{22}$-fatty acids

   d) and if appropriate further auxiliaries from the series consisting of dyestuffs, emulsifiers, solvents, preservatives, attractants and baits.

2. Premixes for the preparation of flexible rodenticidal foams comprising:

a) rodenticidal active compound,

b) hydrophilic polymers having an average molecular weight of 2000 to 60 000 from the series consisting of long-chain polyurethanes, polyesters, polyesterpolyols, polystyrenes, polybutadienes and maleic acid polymers, which are in each case modified in the polymer chain by carboxylic acid groups or amino groups,

c) long-chain aliphatic $C_6$-$C_{22}$-fatty acids, such as palmitic acid, dodecanoic acid and stearic acid, or alkali metal, alkaline earth metal and ammonium salts thereof,

d) and if appropriate further auxiliaries from the series consisting of dyestuffs, emulsifiers, solvents, preservatives, attractants and baits.

3. Preparation of the premixes according to Claim 2, characterized in that the rodenticidal active compound is dissolved, dispersed, emulsified or suspended in the premix solution comprising the polymer, fatty acid and if appropriate further auxiliaries.

4. Process for the preparation of flexible rodenticidal foams from premixes according to Claims 1 to 3, characterized in that water is added to them in amounts of 0 to 80% and they are then prepared by stirring, shaking or in situ by means of blowing agents during application.

**Revendications**

1. Mousses rodenticides souples, qui sont constituées des composants suivants :

a) substance active rodenticide,
b) polymères hydrophiles de masse moléculaire moyenne allant de 2000 à 60 000 (déterminée par chromatographie par perméation de gel (CPG)) de la série des polyuréthannes, polyesters, polyester-polyols, polystyrènes, polybutadiènes, polymères d'acide maléique à longue chaîne, qui sont modifiés chacun dans la chaîne polymère par des groupes acide carboxylique ou amino,
c) acides gras aliphatiques à longue chaîne en $C_6$ à $C_{22}$
d) ainsi que, le cas échéant, autres substances auxiliaires de la série des colorants, des émulsionnants, des solvants, des agents conservateurs, des attractifs sexuels et des appâts.

2. Prémélanges destinés à la production de mousses rodenticides souples, constitués :

a) d'une substance active rodenticide,
b) de polymères hydrophiles ayant une masse moléculaire moyenne de 2000 à 60 000, de la série des polyuréthannes, polyesters, polyester-polyols, polystyrènes, polybutadiènes, polymères d'acide maléique à longue chaîne qui sont modifiés chacun dans la chaîne polymère par des groupes acide carboxylique ou amino,
c) des acides gras aliphatiques à longue chaîne en $C_6$ à $C_{22}$ tels que l'acide palmitique, l'acide dodécanoïque et l'acide stéarique ou leurs sels de métaux alcalins, de métaux alcalino-terreux et d'ammonium,
d) ainsi que, le cas échéant, d'autres substances auxiliaires de la série des colorants, des émulsionnants, des solvants, des agents conservateurs, des attractifs sexuels et des appâts.

3. Préparation des mélanges préalables suivant la revendication 2, caractérisée en ce qu'on dissout, disperse, émulsionne ou met en suspension la substance rodenticide dans la solution de prémélange constituée du polymère, de l'acide gras ainsi que, le cas échéant, d'autres substances auxiliaires.

4. Procédé pour produire des mousses rodenticides souples à partir de prémélanges suivant les revendications 1 à 3, caractérisé en ce qu'on les additionne d'eau en quantités de 0 à 80 %, puis on produit les mousses par agitation, agitation par secousses, ou in situ au moyen de propulseurs pendant l'application.